# EUROPÄISCHE PATENTSCHRIFT

(11) **EP 3 415 407 B1**
(45) Veröffentlichungstag und Bekanntmachung des Hinweises auf die Patenterteilung: **17.08.2022**
(21) Anmeldenummer: 18173142.3
(22) Anmeldetag: 18.05.2018
(51) Int. Cl.: B62D 55/088, B62D 55/12

(54) **TRIEBRAD FÜR EIN RAUPENLAUFWERK**
DRIVE WHEEL FOR A CATERPILLAR TRACKS
ROUE D'ENTRAÎNEMENT POUR UN CHARIOT SUR CHENILLES

(30) Priorität: 13.06.2017 DE 102017112930
(43) Veröffentlichungstag der Anmeldung: 19.12.2018
(73) Patentinhaber: CLAAS Industrietechnik GmbH, 33106 Paderborn (DE)
(72) Erfinder: Obermeier-Hartmann, Robert, 33142 Büren (DE); Rackow, Sascha, 33098 Paderborn (DE); Schulte, Thomas, 33129 Delbrück (DE); Riemer, Andre, 33100 Paderborn (DE)
(74) Vertreter: CLAAS Gruppe

(56) Entgegenhaltungen:
- EP-A2- 0 512 467
- DE-T2- 60 219 697
- US-A- 1 549 594
- US-A- 5 769 512
- US-A1- 2012 242 142

## Beschreibung

Die Erfindung betrifft ein Triebrad für ein Raupenlaufwerk einer landwirtschaftlichen Arbeitsmaschine gemäß Oberbegriff des Anspruches 1, sowie ein Raupenlaufwerk und ein landwirtschaftliches Fahrzeug gemäß den Ansprüchen 9 und 10.

Landwirtschaftliche Arbeitsmaschinen, wie beispielsweise Traktoren oder selbstfahrende Erntemaschinen, werden zunehmend größer und leistungsstärker konstruiert, um eine effizientere Bearbeitung von landwirtschaftlichen Flächen zu ermöglichen. Dabei steigt mit dem Eigengewicht der Arbeitsmaschinen auch das zulässige Gesamtgewicht an, welches auf dem Boden abgestützt werden muss. Ein hohes Gesamtgewicht ermöglicht dabei oftmals auch eine hohe Ballastierung der landwirtschaftlichen Arbeitsmaschine, welche je nach durchzuführenden Arbeiten variabel an der Arbeitsmaschine angeordnet sein kann, beispielsweise um eine Verlagerung des Schwerpunktes der Arbeitsmaschine zu beeinflussen. Um hierbei eine nachteilige Bodenverdichtung möglichst zu vermeiden, ist es erstrebenswert die Aufstandsfläche am Boden zu vergrößern, wobei bei luftgefüllten Rädern mit zunehmender Aufstandsfläche auch der Durchmesser der Räder ansteigt, wodurch der benötigte Bauraum ansteigt.

Daher werden zunehmend Raupenlaufwerke mit einer konstruktionsbedingt hohen Aufstandsfläche eingesetzt, welche beispielsweise ein Raupenband aus einem elastischen Werkstoff wie Gummi aufweisen. Das Raupenlaufwerk weist dabei üblicherweise ein Triebrad zum beispielsweise kraftschlüssigen bzw. reibschlüssigen Antrieb des Raupenbandes sowie mindestens ein Laufrad und dazwischen angeordnete Stützrollen auf. Nachteilig bei dem Einsatz von derartigen Raupenlaufwerken ist eine mögliche Beeinträchtigung der Kraftübertragung zwischen dem Triebrad und dem Raupenband durch reibungsreduzierende Materialien wie Dreck, Schlamm, Lehm oder sonstigen Verschmutzungen.

Zur Reduzierung dieser Verschmutzung ist beispielsweise aus der US 5,769,512 A1 ein einstückig gegossenes Triebrad bekannt, welches radial außenseitig einander abwechselnd angeordnete Reibflächen zur Kraftübertragung von dem Triebrad auf das Raupenband und Ausnehmungen zur Ableitung von Verschmutzungen aufweist. Die sich abwechselnden Ausnehmungen und Reibflächen sind dabei jeweils beiderseits einer Führungsnut angeordnet, welche mit Führungsblöcken des Raupenbandes zur Führung des Raupenbandes zusammenwirken. Durch die Ausnehmungen können zwischen dem Triebrad und dem Raupenband angeordnete Verschmutzungen, welche eine Kraftübertragung beeinträchtigen, entfernt werden. Bei besonders starken Verschmutzungen, beispielsweise bei oder nach einem zumindest teilweisen Einsinken des Raupenlaufwerkes in einen nassen, weichen Untergrund, können Verschmutzungen nicht zuverlässig abgeleitet werden. Zudem erfordert diese Art Triebrad für eine zuverlässige Kraftübertragung zwischen Triebrad und Raupenband eine relativ hohe Bandspannung. Hierdurch kann es jedoch zu einer Beschädigung des Raupenbandes durch das Triebrad kommen, wodurch kostenintensive und zeitaufwendige Wartungsarbeiten erforderlich werden. Ein weiteres Triebrad für ein Raupenfahrzeug mit den Merkmalen der Präambel von Anspruch 1 ist aus der US 2012/242142 A1 bekannt.

Es ist daher eine Aufgabe der Erfindung, ein Triebrad für ein Raupenlaufwerk einer landwirtschaftlichen Arbeitsmaschine bereitzustellen, welches eine verbesserte Funktionssicherheit aufweist und eine Reduzierung des Montage- und Wartungsaufwandes ermöglicht.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Ein Triebrad für ein Raupenlaufwerk einer landwirtschaftlichen Arbeitsmaschine, umfasst mindestens ein Antriebsrad zum Antreiben eines elastischen Raupenbandes des Raupenlaufwerkes. Gemäß der Erfindung weist das mindestens eine Antriebsrad Tragarme auf, welche sich von einer Drehachse des Antriebsrades speichenförmig in radialer Richtung erstrecken, und dass radial außenseitig zumindest zwischen zwei benachbarten Tragarmen jeweils ein Spalt ausgebildet ist, und dass radial außen an einem Tragarm jeweils mindestens ein Reibelement zum kraftschlüssigen Zusammenwirken mit dem Raupenband lösbar angeordnet ist. Die endseitig zwischen benachbarten Tragarmen ausgebildeten Spalteerstrecken sich über die gesamte Breite des Antriebsrades und ermöglichen eine zuverlässige Ableitung von zwischen dem Triebrad bzw. dem Antriebsrad und dem Raupenband angeordneten Verschmutzungen, welche eine reibschlüssige Kraftübertragung beeinträchtigen könnten. Zudem kann radial außenseitig in einem Tragarm jeweils mindestens ein Spalt ausgebildet sein. Durch die speichenförmige Anordnung der Tragarme wird zwischen zwei benachbart angeordneten Tragarmen eine sich in radialer Richtung erstreckende Aussparung ausgebildet. Durch diese zusätzlich zu den Spalten an dem Triebrad bzw. Antriebsrad ausgebildeten Aussparungen ist eine Ableitung von starken Verschmutzungen, beispielsweise nach einem zumindest teilweisen Einsinken des Raupenlaufwerkes in nassen, weichen Boden, möglich. Die radial außen, endseitig an den Tragarmen angeordneten Reibelemente, beispielsweise aus Gummi, verbessern die Kraftübertragung zwischen dem Triebrad bzw. dem Antriebsrad und dem Raupenband, wobei ein unnötig hoher Verschleiß an dem Raupenband vermieden werden kann. Die Reibelemente können radial außenseitig, raupenbandseitig Profilrillen aufweisen, wodurch ein Abtransport von Verschmutzungen zwischen Triebrad bzw. Reibelement und Raupenband ebenso wie eine Kraftübertragung weiter verbessert werden können. Durch die verbesserte Kraftübertragung und den reduzierten Verschleiß des Raupenbandes kann die Funktionssicherheit verbessert werden. Aufgrund der Montage der Reibelemente an den einzelnen Tragarmen wird ein bedarfsgerechter Austausch einzelner Reibelemente möglich, wodurch der Montage- und Wartungsaufwand und damit die Wartungskosten reduziert werden können.

In einer bevorzugten Ausgestaltung der Erfindung ist zwischen benachbart zueinander angeordneten Tragarmen ein Steg angeordnet, welcher die Tragarme radial innenseitig des Spaltes miteinander verbindet. Der Steg ist dabei innenseitig des Spaltes angeordnet, ohne dessen Funktion zu beeinträchtigen. Durch die Anordnung von Stegen zwischen den Tragarmen kann die Festigkeit des Antriebsrades bzw. des Triebrades verbessert werden, beispielsweise für den Fall, dass Steine in das Triebrad gelangen.

Besonders vorteilhafterweise ist mindestens ein Tragelement zur radial außenseitigen, insbesondere lösbaren, Anordnung an einem Tragarm vorgesehen, wobei mindestens ein Reibelement, insbesondere lösbar, radial außenseitig an dem Tragelement angeordnet ist. Durch die Anordnung des Reibelemente an einem Tragelement und dessen endseitige Befestigung an einem Tragarm kann das Reibelement eine Form aufweisen, welche unabhängig von dem Tragarm ausgestaltet sein kann und an unterschiedliche Gegebenheiten anpassbar ist. Zudem können auftretende Kräfte bei größeren Reibelementen besser in den Tragarm eingeleitet werden. Ein Tragelement kann beispielsweise in Form eines Blechbauteils oder Gußbauteils ausgebildet sein. Ein Tragelement kann beispielsweise in axialer Richtung, bezogen auf die Drehachse, an dem Tragarm verlagerbar angeordnet sein. Dies ermöglicht bei der Montage des Tragelementes eine Anpassung der Ausrichtung des Tragelementes relativ zu dem Tragarm beispielsweise bei unterschiedlich ausgestalteten Raupenbändern.

In einer weiteren bevorzugten Ausgestaltung der Erfindung weist ein Tragarm und/oder ein Tragelement zur kraftschlüssigen und/oder formschlüssigen Aufnahme eines Reibelementes ein Verbindungsprofil auf. Das Verbindungsprofil kann beispielsweise in Form einer Schwalbenschwanzführung oder eines Schlitzes zur Aufnahme von Befestigungsmitteln ausgeführt sein. Das Verbindungsprofil ermöglicht eine vereinfachte Montage eines Reibelementes an dem Tragelement und/oder Tragarm, beispielsweise durch Einschieben in das Verbindungsprofil und Befestigen mittels eines oder mehrerer Befestigungselemente.

Vorteilhafterweise weist ein Tragelement ein Führungsprofil zum Zusammenwirken mit Führungsblöcken des Raupenbandes auf. Das Führungsprofil kann dabei in axialer Richtung, seitlich und/oder führungsblockseitig, beispielsweise in Form einer Abwinkelung, an dem Tragelement ausgebildet sein. Hierbei kann ein führungsblockseitig angeordnetes, im Wesentlichen senkrecht zur Drehachse ausgebildetes, planes und/oder balliges Führungsprofil ausgebildet werden. Die Führung des Raupenbandes durch die Führungsprofile der Tragelemente ermöglicht eine kostengünstige und bei Beschädigung leicht austauschbare Führung des Raupenbandes. Durch eine axiale Verlagerung der Tragelemente kann zudem eine einfache Anpassung der Führungsprofile an unterschiedlich ausgestaltete Raupenbänder und/oder Führungsblöcke ermöglicht werden.

In einer weiterhin bevorzugten Ausführungsform bilden die Führungsprofile der Tragelemente eine im Wesentlichen, insbesondere durchgängige, ringförmige Führungsfläche um die Drehachse herum aus. Das Führungsprofil kann in Umfangsrichtung breiter als das restliche Tragelement und/oder das daran angeordnete Reibelement ausgebildet sein. Hierdurch kann unter Beibehaltung des Spaltes zwischen zwei Reibelementen und/oder Tragelementen führungsblockseitig eine im Wesentlichen geschlossene Führungsfläche ausgebildet werden. Die Führungsfläche kann dabei ringförmig um die Drehachse herum ausgebildet sein. Dies hat den Vorteil einer besseren Führung des Raupenbandes über die daran innenseitig angeordneten Führungsblöcke. Zudem kann durch die im Wesentlichen geschlossene Führungsfläche ein Verschleiß des Raupenbandes und/oder der Führungsblöcke verringert werden.

In einer weiteren vorteilhaften Ausgestaltung der Erfindung ist ein Tragelement und/oder Reibelement im Wesentlichen parallel oder angewinkelt zu der Drehachse des Triebrads radial außenseitig an den Tragarmen angeordnet. Hierdurch kann eine variable Anordnung der Tragelemente und/oder Reibelemente umfangsseitig an dem Antriebsrad ermöglicht werden. Dies hat den Vorteil, dass durch die Anordnung der Reibelemente und/oder Tragelemente unterschiedliche Profile ausgebildet werden können, wodurch beispielsweise je nach Umweltbedingungen und/oder Raupenband eine optimale Abfuhr von zwischen dem Triebrad und dem Raupenband Schlupf verursachenden Materials ermöglicht werden kann.

Vorteilhaft ist weiterhin, dass das Triebrad zwei Antriebsräder umfasst, welche beabstandet zueinander an eine Triebachse drehfest angeordnet sind. Das Triebrad wird dabei durch zwei beabstandet zueinander an der Triebachse angeordneten Antriebsräder gebildet. Die Antriebsräder können dabei zur Führung des Raupenbandes mit ihren jeweiligen Führungsprofilen und/oder Führungsflächen zueinander an der Triebachse angeordnet sein, insbesondere beiderseits von Führungsblöcken des Raupenbandes. Durch die Anordnung zweier Antriebsräder kann auch bei montiertem Raupenband eine teilweise Demontage und/oder Wartung des Triebrades ermöglicht werden, wodurch beispielsweise der zeitliche und finanzielle Aufwand für eine Reparatur oder Wartung verringert werden kann.

Weiterhin betrifft die Erfindung ein Raupenlaufwerk für eine landwirtschaftliche Arbeitsmaschine mit mindestens einem, wie vorstehend beschriebenen und ausgebildetem Triebrad.

Weiterhin betrifft die Erfindung eine landwirtschaftliche Arbeitsmaschine, insbesondere ein Traktor oder eine selbstfahrende Erntemaschine, mit mindestens einem, wie vorstehend beschriebenen und ausgebildetem Raupenlaufwerk.

Nachfolgend wird die Erfindung unter Bezugnahme auf die anliegenden Zeichnungen näher erläutert.

Es zeigt:
- Fig. 1:: eine schematische Seitenansicht eines Triebrades eines Raupenlaufwerkes einer landwirtschaftlichen Arbeitsmaschine mit einem Gummiraupenband;
- Fig. 2:: eine schematische Schnittansicht des Triebrades aus zwei Antriebsrädern und des daran anliegenden Raupenbandes aus Fig. 1; und
- Fig. 3:: eine schematische perspektivische Darstellung einer alternativen Ausgestaltungsform eines Antriebsrades.

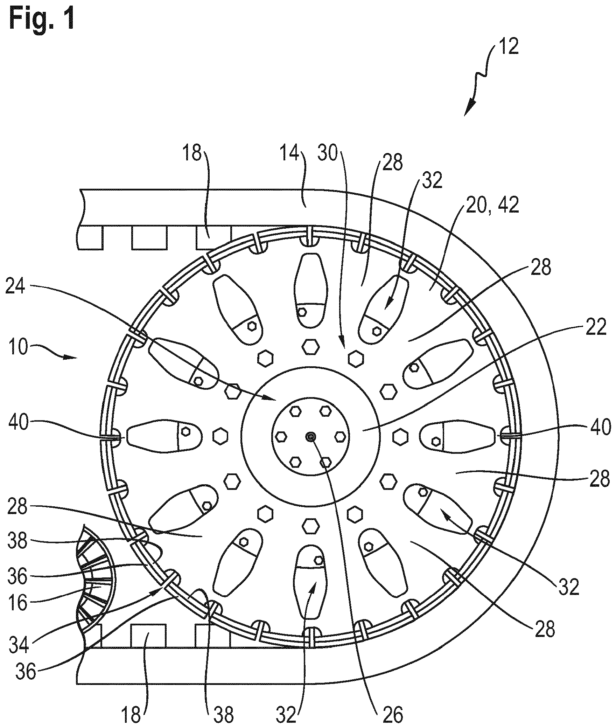

In Fig. 1 ist ein Triebrad 10 eines Raupenlaufwerkes 12 einer landwirtschaftlichen Arbeitsmaschine wie einem Traktor (nicht gezeigt) dargestellt. Auf den Aufbau eines Raupenlaufwerkes mit einem elastischen Raupenband soll nicht detailliert eingegangen werden, da dieser als dem Fachmann bekannt angesehen wird. Eine Arbeitsmaschine im Sinne der Erfindung kann auch eine Baumaschine mit Raupenlaufwerken oder eine selbstfahrende Erntemaschine wie ein Mähdrescher oder ein Feldhäcksler sein.

Das Raupenlaufwerk 12 weist zur Abstützung der landwirtschaftlichen Arbeitsmaschine gegenüber dem Boden ein elastisches Raupenband 14, beispielsweise aus Gummi, auf, welches endlos umläuft. Das Raupenband 14 wird dabei durch das Triebrad 10 angetrieben, in eine Drehbewegung versetzt und läuft über mindestens eine Laufrolle (nicht gezeigt), an welcher das Raupenband 14 umgelenkt wird, und Stützrollen 16, durch die die Arbeitsmaschine gegenüber dem Boden abstützbar ist. Der Antrieb des Raupenbandes 14 erfolgt dabei durch eine kraftschlüssige, insbesondere reibkraftschlüssige, Verbindung radial außenseitig zwischen dem Triebrad 10 und einer Innenfläche des Raupenbandes 14. Zur seitlichen Führung weist das Raupenband 14 innenseitig angeordnete Führungsblöcke 18 auf, welche im Wesentlichen mittig des Raupenbandes 14 und zwischen den mit dem Triebrad 10 zusammenwirkenden Innenflächen angeordnet sind.

Gemäß der Erfindung weist das Triebrad 10 mindestens ein Antriebsrad 20 auf, welches über eine Radnabe 22 lösbar mit einer Triebachse 24 des Raupenlaufwerkes 12 verbunden und durch diese antreibbar ist. Die Triebachse 24 und das Triebrad 10 bzw. das Antriebsrad 20 sind dabei um eine Drehachse 26 drehbar gelagert. Das Antriebsrad 20 ist zu einer Seite der Führungsblöcke 18 des Raupenbandes 14 angeordnet und wird radial außenseitig zumindest teilweise von dem Raupenband 14 umschlungen. Das Antriebsrad 20 weist eine Vielzahl an Tragarmen 28 auf, welche sich speichenförmig von der Drehachse 26 aus in radialer Richtung erstrecken. Die Tragarme 28 gehen dabei radial innenseitig von einem ringförmigen Montagebereich 30 aus, welcher mit der Radnabe 22 lösbar verbindbar ist. Die Tragarme 28 sind beabstandet zueinander ausgebildet, wodurch jeweils zwischen zwei benachbarten Tragarmen 28 eine Aussparung 32 ausgebildet wird, durch welche auch starke Verschmutzungen aus dem Raupenlaufwerk 12 und dem Triebrad 10 herausgefördert werden können.

Zwischen den Tragarmen 28 ist radial außenseitig jeweils ein Spalt 34 ausgebildet, welcher sich in axialer Richtung über die gesamte Breite des Antriebsrades 20 erstreckt. Durch diese Spalte 34 können Verschmutzungen, welche die Reibkraft zwischen dem Triebrad 10 bzw. Antriebsrad 20 beeinträchtigen, zwischen dem Triebrad 10 bzw. dem Antriebsrad 20 und dem Raupenband 14 entfernt werden. Zusätzlich zu den Spalten 34 zwischen den Tragarmen sind radial außen in den Tragarmen 28 ebenfalls Spalte 34 ausgebildet, welche sich ebenfalls in axialer Richtung über die gesamte Breite des Antriebsrades 20 bzw. der Tragarme 28 erstrecken. Die Spalte 34 können dabei nach radial innenseitig in Umfangsrichtung eine größere Erstreckung aufweisen. Hierdurch ist radial innenseitig eines Spaltes 34 hinreichend Platz zum zuverlässigen Ableiten von Verunreinigungen, welche dann beispielsweise seitlich in axialer Richtung, in Richtung der Drehachse 26, aus dem Triebrad 10 ausgeworfen werden können.

Zur Verbesserung der Kraftübertragung zwischen dem Triebrad 10 bzw. dem Antriebsrad 20 und dem Raupenband 14 sind radial außen an den Tragarmen 28, insbesondere lösbar, Reibelemente 36 angeordnet. Diese Reibelemente 36 sind in Form von flachen Gummiblöcken ausgebildet, wodurch neben einer Verbesserung der Kraftübertragung ein Verschleiß des Raupenbandes 14 reduziert werden kann. In der dargestellten Ausführungsform des Antriebsrades 20 sind jeweils zwei Reibelemente 36 endseitig radial außen an einem Tragarm 28 angeordnet, wobei zwischen benachbarten Reibelementen 36 jeweils ein Spalt 34 ausgebildet ist. Für eine vereinfachte Montage und verbesserte Kraftübertragung sind die Reibelemente 36 an Tragelementen 38 befestigt, welche lösbar endseitig an den Tragarmen 28 befestigt sind. Ein Reibelement 36 kann dabei ein- oder mehrstückig ausgebildet sein. Zudem kann das Reibelement 36 lösbar mit dem Tragelement 38 verbunden sein. Denkbar ist auch eine einstückige Ausgestaltung des Reibelementes 36 mit dem Tragelement 38, wobei das Reibelement 36 beispielsweise formschlüssig und/oder stoffschlüssig, beispielsweise durch Aufvulkanisieren, mit dem Tragelement 38 verbunden sein kann.

Die Tragelemente 38 sind in Form von flachen Blechteilen ausgebildet und können in Umfangsrichtung im Wesentlichen die gleiche Erstreckung aufweisen wie ein zugeordnetes Reibelement 36, wodurch die Abmessungen eines Spaltes 34 zwischen den Reibelementen 36 nicht beeinträchtigt wird. Die Tragarme 28 sind radial außen jeweils mittels Stegen 40 verbunden, wodurch die Festigkeit des Antriebsrades 20 erhöht werden kann. Die Stege 40 sind dabei innenseitig der Spalte 34 angeordnet, ohne deren Funktion zu beeinträchtigen. Die Stege 40 sind jeweils radial außenseitig der Aussparungen 32 und innenseitig eines zugeordneten Spaltes 34 angeordnet.

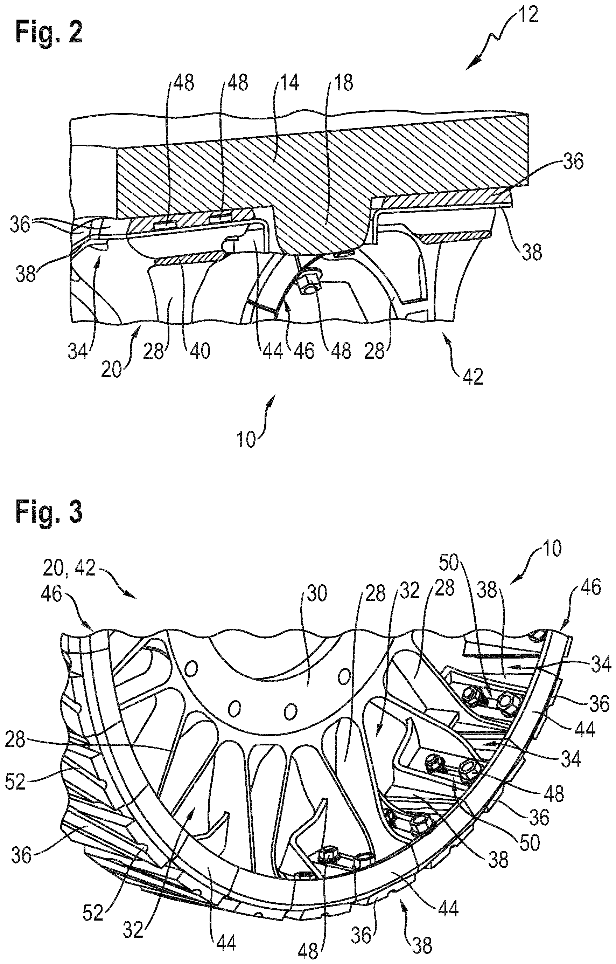

Das Triebrad 10 (Fig. 2) weist neben dem Antriebsrad 20 ein weiteres Antriebsrad 42 auf, welches im Wesentlichen identisch zu dem ersten Antriebsrad 20 ausgebildet sein kann. Die Antriebsräder 20, 42, welche das Triebrad 10 bilden, sind beabstandet zueinander jeweils an der Triebachse 24 lösbar befestigt. Die Antriebsräder 20, 42 sind dabei derart an dem Raupenband 14 angeordnet, dass jeweils ein Antriebsrad 20, 42 an jeder Seite der Führungsblöcke 18 angeordnet ist, um das Raupenband 14 zuverlässig zu führen. Zur Führung des Raupenbandes 14 weisen die Tragelemente 38, insbesondere führungsblockseitig, jeweils ein Führungsprofil 44 auf, welches in Form einer im Wesentlichen rechtwinkligen Abkantung ausgebildet ist. Die Führungsprofile 44 können in Umfangsrichtung eine größere Erstreckung aufweisen als der ein Reibelement 36 tragender Abschnitt des Tragelementes 38 oder als ein Reibelement 36. Dadurch können die Führungsprofile 44 benachbarter Tragelemente 38 eine im Wesentlichen geschlossene, ringförmige Führungsfläche 46 zum Zusammenwirken mit Führungsblöcken 18 des Raupenlaufwerkes 14 ausbilden. Die Tragelemente 38 sind mittels Befestigungsmitteln 48, beispielsweise Schrauben, lösbar an den Tragarmen 28 endseitig befestigt. Die Reibelemente 36, welche in einem montierten Zustand zwischen Tragelementen 38 bzw. den Tragarmen 28 und dem Raupenband 14 angeordnet sind, können stoffschlüssig, beispielsweise mittels Klebstoff, und/oder ebenfalls mittels Befestigungselementen 48 lösbar an den Tragelementen 38 bzw. den Tragarmen 28 befestigt sein.

Das in Figur 3 dargestellte Antriebsrad 20, 42 eines Triebrades 10 weist eine alternative Ausgestaltung der Tragarme 28 aus, welche unverbunden, stegfrei nebeneinander angeordnet sind. Die Aussparungen 32 zwischen den Tragarmen 28 sind aufgrund einer schmaleren Ausgestaltung der Tragarme 28 größer als die in Figur 1 gezeigten Aussparungen. Die Reibelemente 36 bzw. Tragelemente 38 sind paarweise radial außenseitig an den Tragarmen 28 angeordnet. Die Tragelemente 28 sind mittels Befestigungsmittel 48 in Form von Schrauben lösbar an den Tragarmen 28 befestigt. Die Befestigungsmittel 48 können dabei form- und/oder stoffschlüssig, beispielsweise durch Einpressen, drehfest mit dem jeweiligen Tragelement 38 verbunden sein. Die Befestigungsmittel 48 können dabei von dem Reibelement 36 eingeschlossen sein, oder durch eine Zugangsöffnung (nicht dargestellt) in dem Reibelement 36 beispielsweise zur Montage, zugänglich sein.

Zur Aufnahme der Tragelemente 28 weisen die Tragarme 28 jeweils ein Verbindungsprofil 50 auf. Das Verbindungsprofil 50 ist dabei jeweils in Form eines Schlitzes ausgebildet, durch welche die Befestigungsmittel 48 des Tragelementes 38 hindurchragen. Aufgrund der Schlitze sind die Trageelemente 38 in axialer Richtung, parallel zur Drehachse 26, verschiebbar und ermöglichen so, beispielsweise vor einem Befestigen, eine Anpassung an das jeweilige Raupenband 14. Zudem wird so bei Bedarf ein einfacher Austausch eines Tragelementes 38 und/oder eines daran angeordneten Reibelementes 36 ermöglicht. Die Reibelemente 38 weisen radial außenseitig jeweils Profilrillen 52 auf. Die Tragelemente 38 und/oder Reibmittel 36 sind im Wesentlichen parallel zu der Drehachse 26 an dem Antriebsrad 20, 42 angeordnet. Denkbar ist auch eine angewinkelte Anordnung, wodurch ein Profil erstellbar ist, welches an unterschiedliche Umgebungsbedingungen und/oder Raupenbänder anpassbar ist.

### Bezugszeichenliste

- 10: Triebrad
- 12: Raupenlaufwerk
- 14: Raupenband
- 16: Stützrolle
- 18: Führungsblock
- 20: Antriebsrad
- 22: Radnabe
- 24: Triebachse
- 26: Drehachse
- 28: Tragarm
- 30: Montagebereich
- 32: Aussparung
- 34: Spalt
- 36: Reibelement
- 38: Tragelemente
- 40: Steg
- 42: Antriebsrad
- 44: Führungsprofil
- 46: Führungsfläche
- 48: Befestigungsmittel
- 50: Verbindungsprofil
- 52: Profilrille

## Patentansprüche

1. Triebrad für ein Raupenlaufwerk (12) einer landwirtschaftlichen Arbeitsmaschine, mit mindestens einem Antriebsrad (20, 42) zum Antreiben eines elastischen Raupenbandes (14) des Raupenlaufwerkes (12),
**dadurch gekennzeichnet, dass**
das mindestens eine Antriebsrad (20, 42) Tragarme (28) aufweist, welche sich von einer Drehachse (26) des Antriebsrades (20, 42) speichenförmig in radialer Richtung erstrecken, und das radial außenseitig zumindest zwischen zwei benachbarten Tragarmen (28) jeweils ein Spalt (34) ausgebildet ist, wobei die radial außenseitig zwischen benachbarten Tragarmen (28) ausgebildeten Spalte (34) sich über die gesamte Breite des Antriebrades (20, 42) erstrecken und das radial außen an einem Tragarm (28) jeweils mindestens ein Reibelement (36) zum kraftschlüssigen Zusammenwirken mit dem Raupenband (14) lösbar angeordnet ist.

2. Triebrad nach Anspruch 1, **dadurch gekennzeichnet, dass** zwischen benachbart zueinander angeordneten Tragarmen (28) ein Steg (40) angeordnet ist, welcher die Tragarme (28) radial innenseitig des Spaltes (34) miteinander verbindet.

3. Triebrad nach Anspruch 1 oder 2, **dadurch gekennzeichnet, dass** mindestens ein Tragelement (38) zur radial außenseitigen, insbesondere lösbaren, Anordnung an einem Tragarm (28) vorgesehen ist, wobei mindestens ein Reibelement (36), insbesondere lösbar, radial außenseitig an dem Tragelement (38) angeordnet ist.

4. Triebrad nach einem der vorherigen Ansprüche, **dadurch gekennzeichnet, dass** ein Tragarm (28) und/oder ein Tragelement (38) zur kraftschlüssigen und/oder formschlüssigen Aufnahme eines Reibelementes ein Verbindungsprofil (50) aufweist.

5. Triebrad nach Anspruch 3 oder 4, **dadurch gekennzeichnet, dass** ein Tragelement (38) ein Führungsprofil (44) zum Zusammenwirken mit Führungsblöcken (18) des Raupenbandes (14) aufweist.

6. Triebrad nach Anspruch 5, **dadurch gekennzeichnet, dass** die Führungsprofile (44) der Tragelemente (38) eine im Wesentlichen, insbesondere durchgängige, ringförmige Führungsfläche (46) um die Drehachse (26) herum ausbilden.

7. Triebrad nach einem der vorherigen Ansprüche, **dadurch gekennzeichnet, dass** ein Tragelement (38) und/oder Reibelement (36) im Wesentlichen parallel oder angewinkelt zu der Drehachse (26) des Triebrads (10) radial außenseitig an den Tragarmen (28) angeordnet ist.

8. Triebrad nach einem der vorherigen Ansprüche, **dadurch gekennzeichnet, dass** das Triebrad (10) zwei Antriebsräder (20, 42) umfasst, welche beabstandet zueinander an einer Triebachse (24) drehfest angeordnet sind.

9. Raupenlaufwerk für eine landwirtschaftliche Arbeitsmaschine mit mindestens einem Triebrad (10) nach einem der Ansprüche 1 bis 8.

10. Landwirtschaftliche Arbeitsmaschine, insbesondere ein Traktor oder eine selbstfahrende Erntemaschine, mit mindestens einem Raupenlaufwerk (12) nach Anspruch 9.

## Claims

1. A traction wheel for a track roller unit (12) of an agricultural working machine, with at least one drive wheel (20, 42) for driving an elastic track belt (14) of the track roller unit (12),
**characterized in that**
the at least one drive wheel (20, 42) has support arms (28) which extend from an axis of rotation (26) of the drive wheel (20, 42) in the shape of spokes in a radial direction, and **in that** a respective gap (34) is formed radially outwardly at least between two adjacent support arms (28), wherein the radially outwardly formed gaps (34) between adjacent support arms (28) extend over the entire width of the drive wheel (20, 42) and **in that** at least one friction element (36) is respectively detachably radially outwardly disposed on a support arm (28) for force-fitting cooperation with the track belt (14).

2. The traction wheel according to claim 1, **characterized in that** a web (40) is disposed between mutually adjacent support arms (28) which connects the support arms (28) to each other radially inwardly of the gap (34).

3. The traction wheel according to claim 1 or claim 2, **characterized in that** at least one support element (38) is provided in order to be radially outwardly, in particular detachably, disposed on a support arm (28), wherein at least one friction element (36), which in particular is detachable, is disposed radially outwardly on the support element (38).

4. The traction wheel according to one of the preceding claims, **characterized in that** a support arm (28) and/or a support element (38) has a connecting profile (50) for receiving a friction element in a force-fitting and/or interlocking manner.

5. The traction wheel according to claim 3 or claim 4, **characterized in that** a support element (38) has a guide profile (44) for cooperation with guide blocks (18) of the track belt (14).

6. The traction wheel according to claim 5, **characterized in that** the guide profiles (44) of the support elements (38) form a substantially annular, in particular continuous guide surface (46) about the axis of rotation (26).

7. The traction wheel according to one of the preceding claims, **characterized in that** a support element (38) and/or friction element (36) is disposed radially outwardly on the support arms (28), substantially parallel to or inclined with respect to the axis of rotation (26) of the traction wheel (10).

8. The traction wheel according to one of the preceding claims, **characterized in that** the traction wheel (10) comprises two drive wheels (20, 42) which are disposed so as to be fixed against rotation and are spaced apart from each other on a drive axle (24).

9. A track roller unit for an agricultural working machine, with at least one traction wheel (10) according to one of claims 1 to 8.

10. An agricultural working machine, in particular a tractor or a self-propelled harvesting machine, with at least one track roller unit (12) according to claim 9.

## Revendications

1. Roue motrice pour un train de roulement à chenilles (12) d'une machine de travail agricole, comprenant au moins une roue menante (20, 42) pour entraîner une bande de chenille élastique (14) du train de roulement à chenilles (12), **caractérisée en ce que** la au moins une roue menante (20, 42) comporte des bras porteurs (28) qui s'étendent en forme de rayons dans la direction radiale à partir d'un axe de rotation (26) de la roue menante (20, 42) et **en ce que** radialement à l'extérieur, au moins entre deux bras porteurs voisins (28), est ménagé respectivement un interstice (34), les interstices (34) ménagés radialement à l'extérieur entre des bras porteurs voisins (28) s'étendant sur toute la largeur de la roue menante (20, 42) et **en ce que** radialement à l'extérieur, sur un bras porteur (28), est disposé de façon amovible respectivement au moins un élément de friction (36) pour la coopération par complémentarité de forces avec la bande de chenille (14).

2. Roue motrice selon la revendication 1, **caractérisée en ce qu'**entre des bras porteurs (28) disposés au voisinage l'un de l'autre est disposée une nervure (40) qui relie les bras porteurs (28) entre eux radialement à l'intérieur de l'interstice (34).

3. Roue motrice selon la revendication 1 ou 2, **caractérisée en ce qu'**au moins un élément porteur (38) est prévu pour la disposition radialement à l'extérieur, en particulier de manière amovible, sur un bras porteur (28), au moins un élément de friction (36) étant disposé, en particulier de manière amovible, radialement à l'extérieur sur l'élément porteur (38).

4. Roue motrice selon une des revendications précédentes, **caractérisée en ce qu'**un bras porteur (28) et/ou un élément porteur (38) présente un profil de liaison (50) pour la réception d'un élément de friction par complémentarité de forces et/ou par complémentarité de formes.

5. Roue motrice selon la revendication 3 ou 4, **caractérisée en ce qu'**un élément porteur (38) présente un profil de guidage (44) pour une coopération avec des blocs de guidage (18) de la bande de chenille (14).

6. Roue motrice selon la revendication 5, **caractérisée en ce que** les profils de guidage (44) des éléments porteurs (38) forment autour de l'axe de rotation (26) une surface de guidage (46) sensiblement annulaire, en particulier ininterrompue.

7. Roue motrice selon une des revendications précédentes, **caractérisée en ce qu'**un élément porteur (38) et/ou élément de friction (36) est disposé radialement à l'extérieur, sur les bras porteurs (28), de manière sensiblement parallèle ou inclinée par rapport à l'axe de rotation (26) de la roue motrice (10).

8. Roue motrice selon une des revendications précédentes, **caractérisée en ce que** la roue motrice (10) inclut deux roues menantes (20, 42) qui sont disposées de manière solidaire en rotation, à distance l'une de l'autre, sur un essieu moteur (24).

9. Train de roulement à chenilles pour une machine de travail agricole comprenant au moins une roue motrice (10) selon une des revendications 1 à 8.

10. Machine de travail agricole, en particulier un tracteur ou une machine de récolte automotrice, comprenant au moins un train de roulement à chenilles (12) selon la revendication 9.
